Europäisches Patentamt

European Patent Office

Office européen des brevets

(19)

(11) Veröffentlichungsnummer: **0 470 345 A1**

(12) **EUROPÄISCHE PATENTANMELDUNG**

(21) Anmeldenummer: **91109765.7**

(22) Anmeldetag: **14.06.91**

(51) Int. Cl.5: **B01D 5/00**

(30) Priorität: **07.07.90 DE 4021738**

(43) Veröffentlichungstag der Anmeldung:
**12.02.92 Patentblatt 92/07**

(84) Benannte Vertragsstaaten:
**AT BE CH DE DK ES FR GB GR IT LI LU NL SE**

(71) Anmelder: **BK LADENBURG GmbH,
Gesellschaft für chemische Erzeugnisse
Dr.-Albert-Reimann-Strasse 2
W-6802 Ladenburg(DE)**

(72) Erfinder: **Wahl, Fritz
Im Wirbel 61
W-6800 Mannheim(DE)**
Erfinder: **Meinhardt, Friedrich
Lessingstrasse 9
W-6701 Birkenheide(DE)**
Erfinder: **Merkenich, Karl, Dr.
Am Rimbacher Weg 13
W-6149 Fürth/Fahrenbach(DE)**

(74) Vertreter: **Grussdorf, Jürgen, Dr. et al
Patentanwälte Zellentin & Partner
Rubensstrasse 30
W-6700 Ludwigshafen(DE)**

(54) **Vorrichtung und Verfahren zum kontinuierlichen Messen von wasserlöslichen, elektrisch leitenden Staubemissionen in wasserdampfhaltigen Abgasen.**

(57) Die vorliegende Erfindung betrifft eine Vorrichtung zum kontinuierlichen Messen von wasserlöslichen, elektrisch leitenden Staubemissionen in heißen, wasserdampfhaltigen Abgasen, welche eine Sonde zum Ableiten eines definierten Teilstroms, Vorrichtungen zum Messen des Drucks und der Temperatur des heißen Abgases, eine Kühl- und Kondensationsvorrichtung, eine Meßkammer mit einem Leitfähigkeitsmeßgerät zum Bestimmen der Leitfähigkeit des Kondensats, Vorrichtungen zum Messen der Menge und Ableiten des Kondensats, Vorrichtungen zum Messen von Temperatur, Druck und Menge des abgeführten Restgases sowie einer Ableitung, eine Auswertungsvorrichtung, welche aus den zu messenden Werten die Staubemission berechnen und ggfl. über einen Schreiber aufzeichnen kann, enthält.

EP 0 470 345 A1

Gegenstand der vorliegenden Erfindung ist eine Vorrichtung und ein Verfahren zum Messen von Staubemissionen in wasserdampfhaltigen Abgasen.

In vielen Produktionsprozessen entstehen entweder direkt oder bei der Trocknung der entstehenden Produkte Abgase in Form von Verbrennungsgasen oder heißer Luft, die mehr oder weniger große Mengen des entsprechenden festen Produktes in Form von feinem Staub mitreißen. Ein Teil dieses Staubs wird durch Zyklone und/oder Naßwäscher abgeschieden. In Abhängigkeit von der Qualität der Produktionsführung und der Reinigung verbleiben jedoch mehr oder weniger große Mengen des Produktes als sehr feiner Staub (Aerosol) in dem Abgas.

Zum Schutz der Umwelt wird durch die TA Luft ein bestimmter Staubgrenzwert in Abhängigkeit vom jeweiligen Produkt vorgeschrieben. Um die Einhaltung dieser Grenzwerte zu überwachen werden bisher diskontinuierlich Abgasproben aus dem Kamin entnommen und diese nach einem sehr zeitaufwendigen Verfahren analysiert. Kurzfristig auftretende Störungen des Produktionsablaufes oder der Reinigungsvorgänge lassen sich mit diesem diskontinuierlichen Probenahmesystem darüberhinaus nicht sicher erfassen.

Es bestand daher die Aufgabe, eine Vorrichtung zur kontinuierlichen Messung von Staubemissionen zu entwickeln, die einfach und wirtschaftlich arbeitet und mit den bisherigen diskontinuierlichen Messungen in ihren quantitativen Aussagen vergleichbar ist.

Für den Sonderfall der wasserlöslichen, in wäßriger Lösung leitfähigen Stäube, welche in einem wasserhaltigen, vorzugsweise wassergesättigten Abgas enthalten sind, wird durch die in den Ansprüchen näher gekennzeichneten Merkmale eine Lösung dieses Problems beschrieben.

Das erfindungsgemäße Verfahren besteht darin, dem staubhaltigen Abgas einen bestimmten Teilstrom isokinetisch zu entnehmen, der anschließend über eine Kühl- und Kondensationsvorrichtung geleitet wird, in der sich in Abhängigkeit vom Enddruck und der Endtemperatur der im Abgas enthaltene Wasserdampf kondensiert, wobei die Staubpartikel gleichzeitig als Kondensationskeime dienen, so daß diese praktisch quantitativ in dem Kondensat abgeschieden werden. Das abgeschiedene Kondensatwasser wird in einer Leitfähigkeitsmeßzelle untersucht, wobei die gemessene Leitfähigkeit von der Menge und spezifischen Leitfähigkeit des enthaltenen Staubes abhängt. Die durch die Verbrennung von Erdgas entstehenden gasförmigen Verunreinigungen wie Stickoxide ($NO_x$) und Schwefeldioxid ($SO_2$) lösen sich nur geringfügig im Kondensat (max. 5 %) und haben deshalb auf das Meßergebnis nur einen unerheblichen Einfluß. Um die gemessene Leitfähigkeit bzw. Konzentration der Staubpartikel in dem Kondensat in die Konzentration des Staubes in der Abluft umzurechnen, ist es erforderlich, die Kondensatmenge in Beziehung zu dem entnommenen Teilabgasstrom zu setzen. Dazu ist es möglich, einerseits die Menge des entnommenen Abgases und andererseits die Menge des daraus entstehenden Kondensats direkt zu messen und die im Abgaskondensat gefundene Staubkonzentration auf mg Staub pro $Nm^3$ umzurechnen.

Nachteilig erweist sich dabei, daß die Abgase in ihrer Temperatur und in dem durch die Produktionsweise und den Außendruck bestimmten Druck variieren, so daß in diesem Bereich eingesetzte Gasuhren relativ ungenau arbeiten. Auch die kontinuierliche Bestimmung der Kondensatmenge bereitet Schwierigkeiten, da hierbei relativ kleine Mengen zu bestimmen sind.

Soweit von einer konstanten Ausgangsfeuchte der zu messenden Abluft ausgegangen werden kann, beispielsweise von einem gesättigten Wasserdampf in der Abluft eines Naßwäschers, erweist es sich daher als wesentlich einfacher, das Verhältnis von Kondensatmenge zu Abgasvolumen rechnerisch zu ermitteln, in dem man die Abgastemperatur, den Abgasdruck im Abluftkamin, die Temperatur und den Druck des Teilgasstromes mißt und daraus die Menge des pro-Kubikmeter-Abgases abgeschiedenen Kondensats berechnet, um über die Kondensatleitfähigkeit wiederum auf die Menge der in der Abluft enthaltenen Stäube zurückzurechnen. Bei nicht wasserdampfgesättigten Abgasen wird mit einem Feuchtesensor die Wasserdampfkonzentration im Abgas gemessen und zur Berechnung der Staubkonzentration verwendet. Soweit der Staub aus einer reinen Substanz besteht, lassen sich die entsprechenden Leitfähigkeiten theoretisch berechnen und mit dem gemessenen Wert in Verhältnis setzen, soweit es sich jedoch um Gemische von Substanzen handelt, die eine mehr oder weniger große spezifische Leitfähigkeit aufweisen und gegebenenfalls mit nicht leitenden Substanzen gemischt sind, ist es nötig, von dem zu erwartenden Staubgemisch Eichkurven aufzustellen. Auf diese Weise wird auch ein Fehler durch leitfähige Bestandteile der zur Trocknung dienenden Rauchgase mit kompensiert. Dies ist leicht möglich, indem man größere Mengen Kondensat ansammelt, zur Trockene eindampft, um die Rückstandsmenge zu bestimmen und ins Verhältnis zur Leitfähigkeit zu setzen.

Überraschenderweise wird mit dem in der Kühlvorrichtung kondensierenden Wassers die in der Abluft enthaltene Staubmenge so quantitativ abgeschieden, daß sich in dem Restgas kein Staub mehr nachweisen läßt. Leitfähigkeitsmessungen und chemische Analyse des Kondensats ergeben innerhalb der Fehlergrenzen die gleichen Konzentrationen, so daß die einfache Leitfähigkeitsmessung bevorzugt wird.

Das erfindungsgemäße Verfahren läßt sich auf alle Staubemissionen anwenden, bei denen einerseits der Staub wasserlöslich ist und in wäßriger Lösung eine meßbare Leitfähigkeit bewirkt und andererseits das Abgas so viel Wasserdampf enthält, und heiß genug ist, so daß bei der Abkühlung ausreichend Kondensat abgeschieden wird, um den Staub einzuschließen und abzuscheiden. Besonders vorteilhaft kannn das Verfahren daher bei der Staubbestimmung in der Abluft von Trocknungsprozessen (Sprühtrocknung, Wirbelschicht, Drehrohröfen etc.) durchgeführt werden und bei solchen Prozessen, bei denen heiße Abgase durch Naßwäscher gereinigt werden.

In dem Folgenden wird das Verfahren beispielhaft an der Messung von Phosphatstäuben bei der Produktion von Tetrakaliumpyrophosphat (TKPP) und Natriumtripolyphosphat (NTPP) erläutert, ohne daß damit die allgemeine Bedeutung eingeschränkt werden soll.

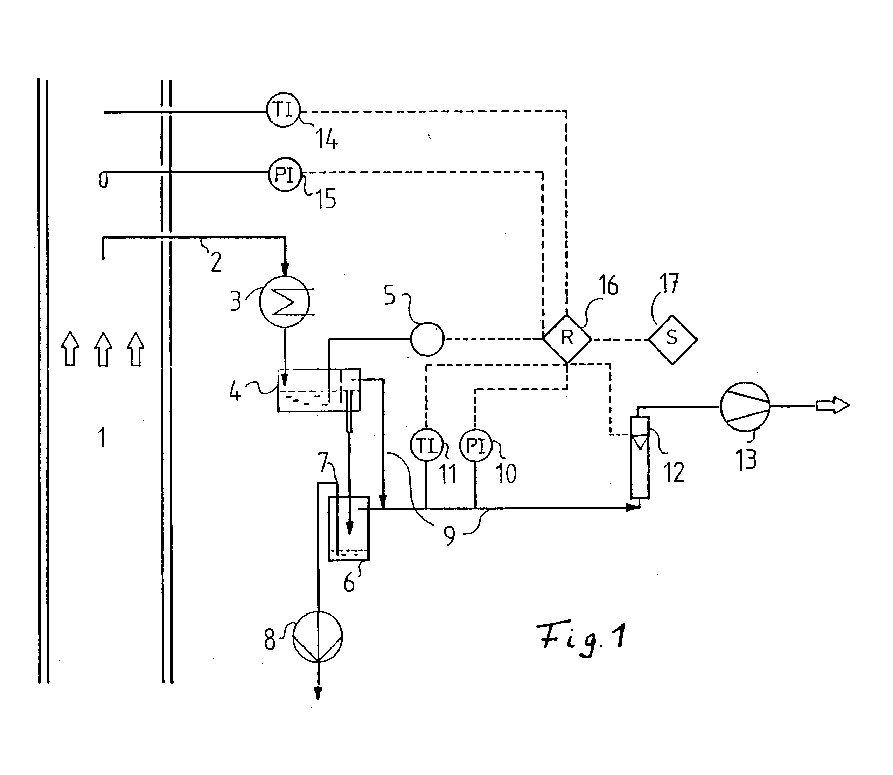

Eine erfindungsgemäß verwendbare Vorrichtung ist in der Figur 1 schematisch wiedergegeben.

In dieser Figur bedeutet 1 einen Abluftkamin, 2 eine Abgassonde für die Entnahme eines Teilstromes, 3 eine Kühl- und Kondensationsvorrichtung, in der der Teilstrom auf ca. 20 °C abkühlt, wodurch sich der Wasserdampf als Kondensat abscheidet, 4 eine Meßkammer, die als Durchflußmeßzelle mit einem Leitfähigkeitsmeßgerät 5 ausgebildet ist. Das Kondensat wird in einem Gefäß aufgefangen und über ein Tauchrohr 7 mittels einer Pumpe 8 abgeleitet und mengenmäßig bestimmt. Eine Gasleitung 9 oberhalb des Flüssigkeitssstandes der Meßkammer und des Fraktionssammlers führt den auskondensierten Teilgasstrom einerseits zu einem Druckmeßgerät 10 und einem Temperaturmeßgerät 11 und andererseits über einen Durchflußmesser 12 zu einer Abgaspumpe 13, über die das Restgas aus dem System herausgeführt wird. Die Temperatur des Abgases wird im Abluftkamin 1 über ein Thermoelement 14 und der Druck mit einem Meßgerät 15 gemessen. In dem Rechner 16 werden sämtliche Meßdaten zusammengeführt und die jeweilige Staubkonzentration errechnet und auf einen x/t-Schreiber übertragen.

In der folgenden Tabelle 1 sind die an einem aktuellen Produktionsprozeß, d. h. der Produktion von TKPP in einem Drehrohr mit nachgeschaltetem Zyklon zur trockenen Staubabscheidung und einem Naßwäscher zur weiteren Reinigung der Abluft gemessenen Daten zusammengestellt. Zur Kontrolle wurde neben den Leitfähigkeitsmessungen auch noch eine photometrische Bestimmung des Phosphats durchgeführt, deren Werte ebenfalls in der Tabelle enthalten sindist.

In der folgenden Tabelle 2 wurden die Meßdaten eines entsprechenden Produktionsprozesses wiedergegeben, wobei in dem gleichen Drehrohr Pentanatriumtriphosphat hergestellt wurde.

## Tabelle: 01

**Betriebseinheit**: Drehrohr V

**Produkt**      : Tetrakaliumdiphosphat

**Abluftquelle**  : 033

| Probe Nr. | Zeit | Abluftparameter | | Restgas | | | | Kondensat | | Massekonzentration | | |
|---|---|---|---|---|---|---|---|---|---|---|---|---|
| | | Temp. | Druck | Parameter | | Menge | | Menge | Leitf. | Leitf. | Photom. | $\Delta$ |
| | | | | Temp. | Druck | Betriebs-druck | Normal-druck | | | | | |
| | | [°C] | [mbar] | [°C] | [mbar] | [m³] | [Nm³] | [ml] | [µS/cm] | [mg/Nm³] | [mg/Nm³] | [mg/Nm³] |
| 1 | 10.53-11.13 | 65,4 | 1013 | 20 | 571 | 1,591 | 0,801 | 199 | 601 | 98,6 | 98,6 | ± 0 |
| 2 | 11.13-11.33 | 65,6 | 1013 | 20 | 572 | 1,598 | 0,806 | 209 | 601 | 102,9 | 110,1 | - 7,2 |
| 3 | 11.33-11.53 | 65,1 | 1013 | 20 | 576 | 1,596 | 0,811 | 192 | 548 | 80,9 | 82,9 | - 2,0 |
| 4 | 11.53-12.13 | 65,4 | 1013 | 20 | 578 | 1,593 | 0,813 | 195 | 527 | 83,4 | 79,3 | + 4,1 |
| 5 | 12.13-12.33 | 65,1 | 1013 | 20 | 578 | 1,592 | 0,812 | 190 | 519 | 80,2 | 74,9 | + 5,3 |
| 6 | 12.33-12-53 | 65,6 | 1013 | 20 | 578 | 1,593 | 0,812 | 194 | 519 | 81,8 | 79,3 | + 2,5 |
| 7 | 12.53-13.13 | 65,1 | 1013 | 21 | 579 | 1,599 | 0,812 | 186 | 585 | 88,4 | 93,5 | + 5,1 |
| 8 | 13.13-13.33 | 65,0 | 1013 | 21 | 581 | 1,596 | 0,814 | 190 | 548 | 84,4 | 90,5 | - 6,1 |
| 9 | 13.33-13.53 | 65,3 | 1013 | 21 | 581 | 1,584 | 0,808 | 195 | 515 | 82,0 | 89,5 | - 7,5 |
| 10 | 13.53-14.13 | 65,9 | 1013 | 21 | 582 | 1,585 | 0,809 | 203 | 577 | 95,6 | 95,3 | + 0,3 |
| 11 | 14.13-14.33 | 65,4 | 1013 | 21 | 584 | 1,582 | 0,811 | 191 | 559 | 86,9 | 88,0 | - 1,1 |
| 12 | 14.33-14.53 | 65,2 | 1013 | 21 | 583 | 1,583 | 0,810 | 190 | 585 | 90,6 | 96,6 | - 6,0 |
| 13 | 14.53-15.13 | 65,3 | 1013 | 21 | 582 | 1,586 | 0,810 | 190 | 659 | 102,0 | 106,1 | - 4,1 |

Tabelle: 02

Betriebseinheit: Drehrohr V
Produkt: Pentanatriumtriphosphat
Abluftquelle: 033

| Probe Nr. | Zeit | Abluftparameter | | Restgas | | | | Kondensat | | Massekonzentration | | |
|---|---|---|---|---|---|---|---|---|---|---|---|---|
| | | Temp. [°C] | Druck [mbar] | Parameter Temp. [°C] | Druck [mbar] | Menge Betrieb [m³] | Norm [Nm³] | Menge [ml] | Leitf. [µS/cm] | Leitf. [mg/Nm³] | Photom. [mg/Nm³] | Δ [mg/Nm³] |
| 1 | 8.10- 8.30 | 62,4 | 1013 | 20 | 650 | 1,604 | 0,924 | 180 | 209 | 32,6 | 29,6 | +3,0 |
| 2 | 8.30- 8.50 | 62,3 | 1013 | 20 | 652 | 1,599 | 0,925 | 182 | 204 | 32,1 | 34,7 | -2,6 |
| 3 | 8.50- 9.10 | 63,0 | 1013 | 20 | 651 | 1,599 | 0,925 | 186 | 200 | 32,2 | 36,9 | -4,7 |
| 4 | 9.10- 9.30 | 63,5 | 1013 | 20 | 652 | 1,590 | 0,919 | 192 | 188 | 31,4 | 32,2 | -0,8 |
| 5 | 9.30- 9.50 | 63,3 | 1013 | 21 | 652 | 1,598 | 0,919 | 190 | 181 | 29,9 | 32,2 | -2,3 |
| 6 | 9.50-10.10 | 63,3 | 1013 | 21 | 652 | 1,601 | 0,920 | 189 | 176 | 28,9 | 32,4 | -4,2 |
| 7 | 10.10-10.30 | 63,4 | 1013 | 21 | 651 | 1,598 | 0,917 | 188 | 172 | 28,2 | 30,0 | -1,8 |
| 8 | 10.30-10.50 | 62,9 | 1013 | 21 | 650 | 1,600 | 0,917 | 183 | 174 | 27,8 | 31,8 | -4,0 |
| 9 | 10.50-11.10 | 63,3 | 1013 | 21 | 650 | 1,605 | 0.920 | 189 | 173 | 28,4 | 31,9 | -3,5 |
| 10 | 11.10-11.30 | 63,9 | 1013 | 21 | 651 | 1,598 | 0,917 | 193 | 179 | 30,1 | 28,1 | +1,9 |
| 11 | 11.30-11.50 | 64,0 | 1013 | 21 | 651 | 1,603 | 0,920 | 196 | 180 | 30,7 | 30,2 | +0,5 |
| 12 | 11.50-12.10 | 63,9 | 1013 | 21 | 650 | 1,605 | 0,920 | 196 | 188 | 32,0 | 30,2 | +1,8 |

**Patentansprüche**

1. Vorrichtung zum kontinuierlichen Messen von wasserlöslichen, elektrisch leitenden Staubemissionon in heißen, wasserdampfhaltigen Abgasen, enthaltend

a) eine Sonde (2) zum Ableiten eines definierten Teilstroms,

b) Vorrichtungen zum Messen des Drucks (15) und der Temperatur (14) des heißen Abgases

c) eine Kühl- und Kondensationsvorrichtung (3)

d) eine Meßkammer (4) mit einem Leitfähigkeitsmeßgerät (5) zum Bestimmen der Leitfähigkeit des Kondensats

e) Vorrichtungen zum Messen der Menge und Ableiten des Kondensats (6, 7, 8)

f) Vorrichtungen zum Messen von Temperatur (11), Druck (10) und Menge (12) des abgeführten Restgases sowie einer Ableitung (9, 13),

g) eine Auswertungsvorrichtung (16), welche aus den zu messenden Werten die Staubemission berechnen und ggfl. über einen Schreiber (17) aufzeichnen kann.

**2.** Vorrichtung gemäß Anspruch 1, **dadurch gekennzeichnet**, daß die Meßkammer (4) eine Durchflußzelle ist und die zu ermittelnden Emissionswerte einem der Durchflußzeit entsprechendem Mittelwert entsprechen.

**3.** Vorrichtung gemäß Anspruch 1 oder 2, **dadurch gekennzeichnet,** daß sie hinter dem Naßwäscher einer Phosphatproduktionsanlage angeschlossen ist.

**4.** Verfahren zum kontinuierlichen Messen von wasserlöslichen, elektrisch leitenden Staubemissionen in heißem wasserdampfhaltigen Abgasen, **dadurch gekennzeichnet,** daß man

a) einen Teilstrom aus dem Abgas entnimmt

b) den Teilstrom unter den Taupunkt des enthaltenen Wasserdampfs abkühlt,

c) mit dem sich bildenden Kondensat die Staubanteile aus dem Abgas auswäscht,

d) im Kondensat die Leitfähigkeit bestimmt,

e) die Mengen, die Temperatur und den Druck von Abgas und Restgas sowie ggfl. das Kondensat mißt,

f) Kondensat und Restgas kontinuierlich oder diskontinuierlich abführt und

g) aus den Meßwerten von d) und e) mittels einer Eichkurve oder aufgrund der theoretisch berechneten Leitfähigkeiten dem Anteil des Staubs in dem Abgas berechnet.

**5.** Verfahren gemäß Anspruch 4, dadurch gekennzeichnet, daß das Abgas aus dem Naßwäscher einer Phosphatproduktionsanlage entnommen wird, bei einer Ablufttemperatur von 60 - 80 °C wasserdampfgesättigt ist, auf eine Temperatur von 20 - 30 °C abgekühlt wird, die Leitfähigkeit des Kondensats in einer Durchflußzelle bestimmt wird, wobei der Inhalt der Zelle dem Kondensatanteil von 10 - 30 min entspricht, der Überlauf der Durchflußzelle in einem Sammler aufgefangen und diskontinuierlich aus dem System abgezogen wird, während das Restgas kontinuierlich abgepumpt wird.

Fig. 1

EP 0 470 345 A1

**Europäisches Patentamt**

# EUROPÄISCHER RECHERCHENBERICHT

Nummer der Anmeldung

# EP 91 10 9765

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 638 362   (SIEMENS AG) <br> * Ansprüche 1, 4 * <br> − − − | 1,4 | B 01 D 5/00 |
| A | US-A-4 243 650   (U.TSAO) <br> * Anspruch 1; Figur 3 * <br> − − − | 1,4 | |
| A,P | US-A-4 950 073   (H.T.SOMMER) <br> * Anspruch 1 * <br> − − − − − | 1,4 | |

**RECHERCHIERTE SACHGEBIETE (Int. Cl.5)**

B 01 D
G 01 N

**Der vorliegende Recherchenbericht wurde für alle Patentansprüche erstellt**

| Recherchenort | Abschlußdatum der Recherche | Prüfer |
|---|---|---|
| Berlin | 25 November 91 | BERTRAM H E H |